# EUROPEAN PATENT APPLICATION

(11) **EP 4 345 004 A1**
(43) Date of publication of application: **03.04.2024**
(21) Application number: 22198514.6
(22) Date of filing: 28.09.2022
(51) Int. Cl.: B64D 11/02, A47J 47/20, B64D 11/04, B64F 5/40, B01D 35/04, C02F 1/28

(54) **THREE STAGE PURIFICATION FAUCET (FILTERED FAUCET)**

(71) Applicant: B/E Aerospace, Inc., Winston-Salem, NC 27105 (US)
(72) Inventor: MALABAN, John Erick, 4204 San Pascual (PH)
(74) Representative: Dehns

(57) **Abstract**

Disclosed herein is an aircraft water supply system. The water supply system comprises a water tank (10) for storing potable water; and two or more faucets (26) that are each connected to the water tank and configured to dispense the potable water on demand in response to a user actuating the faucet. Each of the two or more faucets includes a respective filtering unit (22). In embodiments the filtering units are integrated within the faucets and comprise three stages of filtering, namely (i) a coarse filtering stage (30); (ii) a first filtering stage (32) comprising a hollow fiber filter and/or one or more ion exchange resin filters; and (iii) a second filtering stage (34) comprising activated carbon.

## Description

### TECHNICAL FIELD

The technology described herein relates to aircraft water supply systems and in particular to systems for providing potable (drinkable) water on-board an aircraft.

### BACKGROUND

An aircraft's water supply system supplies potable water to different parts of the plane during flight. The water is typically stored in a tank in the aircraft cargo compartment. Suitable plumbing is therefore provided in order to distribute the water as desired.

Potable water is used in a variety of ways on board commercial transport aircraft, including direct human consumption, food preparation and sanitation/hygiene activities. Potential uses include:
- preparation of hot and cold beverages, such as coffee, tea and powdered beverages;
- direct ingestion from cold water taps and water fountains;
- brushing of teeth in lavatories;
- hand/face washing in lavatories and galleys, on-board showing facilities;
- cleaning of utensils and work areas.

Although some of these uses do not necessitate human consumption, they may all involve human contact and possibly incidental ingestion (e.g. tooth brushing).

It is therefore important to ensure water quality. Various health studies have shown that water quality remains a significant issue on-board aircraft and the majority of water that is consumed is purchased in bottled or canned form. Water from the aircraft's water supply system is however still used for preparing hot beverages.

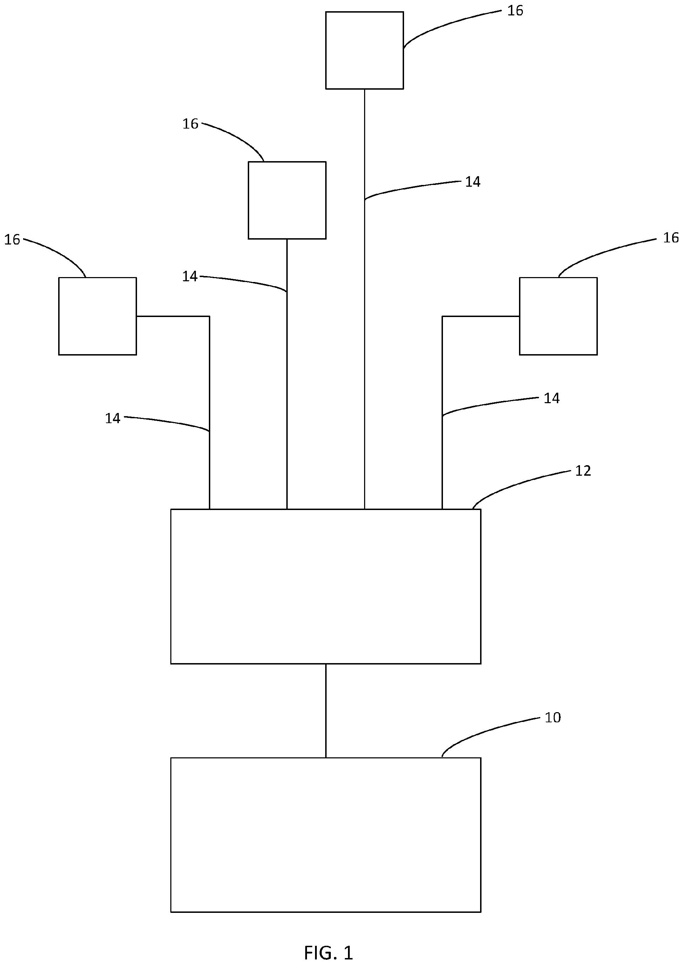

In some traditional aircraft water supply systems a single (relatively large) filter is provided in association with the water tank to filter the water as it is distributed from the water tank to the different parts of the aircraft. An example of this is shown in Figure 1 where a single filtering unit 12 is provided close to the storage tank 10. Water obtained from the storage tank 10 is then routed through the filtering unit 12 and after passing the filtering unit 12 is then passed by appropriate plumbing 14 to the respective faucets (or other outlets) 16 that require the water. However, this approach typically requires a relatively larger filtering unit 12 in order to provide appropriate routing for filtering all of the water that may be required. The use of a larger filtering unit 12 with different internal routing can also introduce dirt or water traps within the filtering unit. For this reason, the filtering unit 12 must therefore regularly be replaced (typically on a monthly basis) in order to meet the desired water quality requirements. Thus, the maintenance requirements (and costs) for such water supply systems can be relatively high.

The Applicants therefore believe there remains room for improvement in the provision of potable water on-board an aircraft.

### SUMMARY

A first embodiment of the technology disclosed herein comprises an aircraft water supply system comprising: a water tank for storing potable water; and two or more faucets that are each connected to the water tank and configured to dispense the potable water on demand in response to a user actuating the faucet, wherein each of the two or more faucets includes a respective filtering unit.

In embodiments the respective filtering unit for each faucet provides three (or more) stages of filtering. For example, in embodiments the filtering unit comprises: (i) a coarse filtering stage; (ii) a first filtering stage comprising a hollow fiber filter and/or one or more ion exchange resin filters; and (iii) a second filtering stage comprising activated carbon.

In embodiments the filtering units are integrated or installed into their respective faucets such that the filtering unit is provided within the body of the faucet between an inlet portion of the faucet at which the faucet is connected to the aircraft water supply system and an outlet of the faucet through which water is dispensed. This may be particularly beneficial for providing filtering as water is dispensed in an effective manner, and may also facilitate weight savings and reduced maintenance burden, as will be described below. However, other arrangements are contemplated and respective filters could be provided adjacent the inlet portions of the faucets, but not within the body of the faucet.

A second embodiment of the technology disclosed herein extends to such faucet for use in the aircraft water supply system of the first embodiment. The faucet according to the second embodiment thus includes an integrated filtering unit that comprises: (i) a coarse filtering stage; (ii) a first filtering stage comprising a hollow fiber filter and/or one or more ion exchange resin filters; and (iii) a second filtering stage comprising activated carbon.

According to the above arrangements a respective filtering unit is associated with (e.g., and in embodiments, by being integrated within) a faucet within an aircraft water supply system to filter the water at the point of dispensing. Accordingly, in embodiments, the aircraft water supply does not comprise a central filtering unit. That is, in embodiments, the filtering is entirely integrated into the respective faucets.

This can provide various benefits in terms of reducing the overall weight and bulk associated with the filtering, and also reducing pressure loss, e.g. compared to arrangements using a single filtering unit.

For instance, by integrating the filtering unit with the faucet, it is possible to reduce the pressure losses and cut off the routing that would otherwise have to go through the central filter. This can therefore provide improved water flow rates in the system.

Eliminating other hoses and pipeline that may be required to connect a single central filtering unit may also improve the routing of the system with regards to slope and drainage performance. As well as improving water flow rates, this integrated arrangement may thus also help reduce the formation of water or dirt traps that may contaminate the water system. This can therefore extend the effective life of the filtering arrangement.

Thus, although there are more components that may need to be replaced (e.g. compared to a single filter unit), by integrating the filtering units into the faucets, it is possible to achieve various optimisations that can reduce the frequency at which the filtering units are replaced whilst still maintaining sufficiently high water quality such that there is an overall reduction in maintenance requirements.

For example, because aircraft water supply is a closed system, this may need more effective filtering (e.g. compared to residential systems which are typically already filtered at source and water is typically not stored in a static tank for extended periods of use). The above arrangement thus provides an improved three (or more) stage filtering unit comprising: (i) a coarse filtering stage; (ii) a first filtering stage comprising a hollow fiber filter and/or one or more ion exchange resin filters; and (iii) a second filtering stage comprising activated carbon. In embodiments, the coarse filtering stage comprises a mesh or gauze. In embodiments, the second filtering stage comprises activated carbon pebbles. This can provide very effective filtering with reduced pressure loss. However, the Applicants have found that this can also provide surprising benefits in terms of reduced maintenance burden.

For instance, the shelf life of activated carbon is in general very long. Further, hollow fiber filters can typically last longer than a year before they need to be replaced. Ion exchange resin filters may have a slightly shorter lifetime but in general can typically last a number of months before being replaced and/or re-charged. Thus, in the above arrangements, maintenance requirements may be drastically reduced compared to the use of a central filtering unit which may typically require replacement on a monthly basis due to the relatively larger volume of water passing through the central filtering unit, and the greater risk of water or dirt traps forming due to the additional routing or connections required in order to install the central filtering unit.

Similarly, by integrating the filtering units into the faucets, it is also possible to reduce the weight and cost of the filtering. That is, again, although there are more filtering units, these can be much smaller, such that there may be an overall reduction in weight/cost.

The above arrangements can thus provide effective filtering with reduced maintenance burden, and also reduced costs and weight. The above arrangements are therefore particularly suitable for aircraft applications.

In embodiments, the filtering unit comprises a cartridge that is removable from the faucet. In such embodiments, the removable cartridge may include any one or more of (i) the coarse filtering stage; (ii) the first filtering stage; and (iii) the second filtering stage. For example, in one such embodiment, the first and second filtering stages may be comprised within a removable cartridge, with the coarse filtering stage being fixed within the faucet. Other arrangements would however be possible. In the case where the filtering unit comprises a cartridge, the cartridge may be replaced individually when maintenance is required. In other embodiments the filtering unit may be fixed within the body of the faucet such that the faucet as a whole is replaced together when maintenance is required.

In embodiments, the filtering stages are arranged such that water flows through the coarse filtering stage and then into and through the first filtering stage and the second filtering stage in sequence. In some embodiments, water may flow radially through the second filtering stage to an outlet of the faucet. Other arrangements are however possible.

As mentioned earlier, the water supply system described above is particularly designed for use on-board an aircraft (and is thus an "aircraft water supply system"). That is, in embodiments, the aircraft water supply system or faucet may be comprised within an aircraft. Thus, from a third embodiment there is provided an aircraft comprising a water supply system substantially as described herein according to any of the above embodiments. In embodiments the water tank is installed within a cargo compartment of the aircraft. Other suitable arrangements would however be possible.

Various embodiments will now be described, by way of example only, with reference to the drawings.

### BRIEF DESCRIPTION OF DRAWINGS

Figure 1 shows a schematic of a more traditional aircraft water supply system;
Figure 2 shows a schematic of an aircraft water supply system according to an embodiment;
Figure 3 shows schematically a faucet with integrated three-stage filtering according to an embodiment;
Figure 4 shows in more detail a filter capsule for use with the faucet shown in Figure 4.

Like reference numerals are used for like components where appropriate in the Figures.

### DETAILED DESCRIPTION

Figure 1 shows a schematic of a more traditional aircraft water supply system in which potable water is filtered using a central filtering unit 12 that is arranged so as to filter water as it being distributed from the water storage tank 10. The use of a central filtering unit 12 as shown in Figure 1 can provide some maintenance benefits in that there is only a single unit that needs to be replaced. However, the filtering unit 12 may be relatively expensive and bulky. The increased size of the filtering unit 12 can also result in relatively higher pressure drops. Further, because the filtering unit 12 must filter a larger volume of water and provide respective pathways for different respective faucets there is a greater risk of water or dirt traps forming within the filter, which means the filter must be replaced more regularly. For example, with this approach, it may be required to replace the filtering unit 12 on a monthly basis.

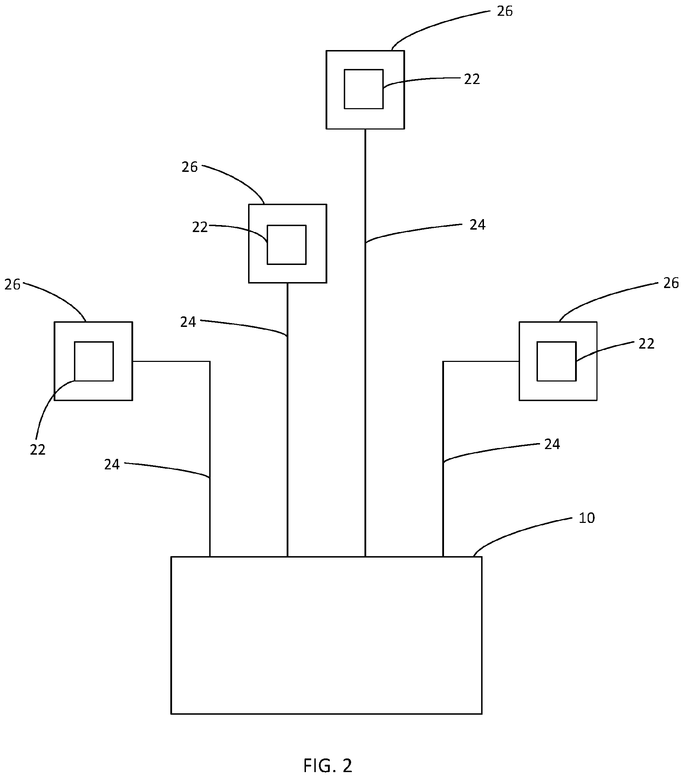

Figure 2 shows a schematic of an aircraft water supply system according to an embodiment in which the central filtering unit 12 is removed and instead respective filtering units 22 are provided integrated with the faucets 26 such that the water is filtered as it is dispensed. To ensure adequate filtering a three-stage filtering unit 22 is provided including a pre-filter stage for eliminating rust, silt, blood worms, a first filtering stage for filtering out water borne pathogens and protozoa and a second filtering stage for removing residual chlorine, heavy metal ions and trihalomethanes. The configuration of the filtering unit 22 stages will be described further below.

This integrated filtering arrangement provides various benefits in terms of reducing the overall size and weight of the filtering system, and also reducing overall pressure drop. Furthermore, the Applicants have found that this approach advantageously reduces maintenance requirements and costs. For example, although there is now a greater number of components that need to be maintained, in general the lifetime of each filtering unit may be relatively higher, such that there is an overall reduced maintenance burden, as will be explained further below. Further, the individual filtering units 22 are relatively cheaper and can therefore be replaced easily. Thus, the embodiment shown in Figure 2 provides various advantages compared to the more traditional aircraft water supply system shown in Figure 1.

Various features of aspects of the technology described herein will now be described. It will be understood that these features may be suitable combined as desired according to embodiments. Thus, any of the features of the filter may be combined with any features of the individual filter stages, etc., as desired.

### Filtering units 22

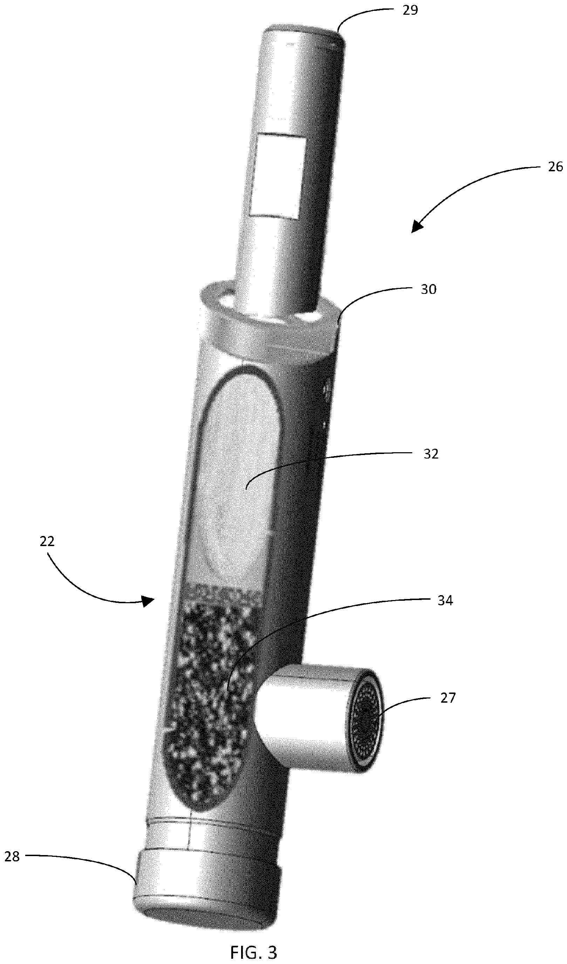

Figure 3 shows in more detail the arrangement of the three-stage filtering unit 22 within a faucet 26 of the water supply system. The faucet 26 shown in Figure 3 is connected at inlet port 29 to the water supply system and water flows through the filtering unit 22 to outlet 27. The faucet further comprises an actuator 28 for actuating the faucet. In Figure 3 this is provided in the form of a button but other arrangements would of course be possible In general, it will be appreciated that the faucet may be configured in any suitable and desired manner.

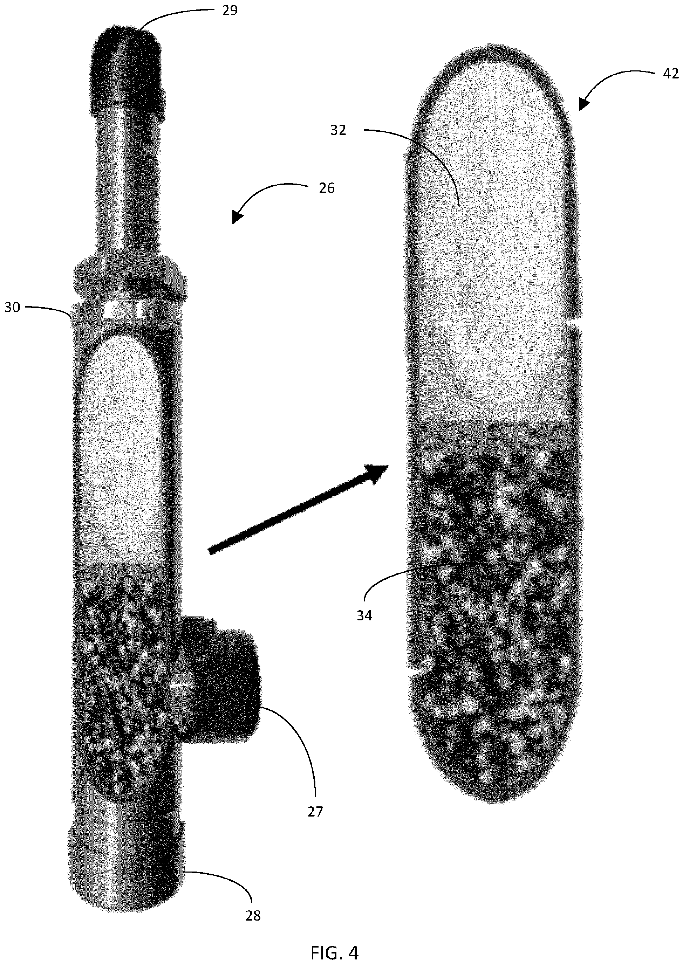

For example, Figure 3 shows the filtering unit 22 integrated within the body of the faucet 22. However, the arrangement of the filtering unit 22 relative to inlet port 29 and outlet 27 may be varied as desired. Further, in some embodiments, the filtering unit 22 may comprise a separate cartridge 42, as shown in Figure 4. In that case, the cartridge 42 may simply be replaced when it is necessary to do so. In other embodiments, the faucet and filtering unit 22 may be provided as a single unit such that the whole faucet is replaced together. Various arrangements would be possible in this regard.

The filtering unit 22 includes three or more filtering stages. In particular, in the example shown in Figure 3, the filtering unit 22 includes a coarse, pre-filter stage 30 that is located in-line with inlet port 29 such that the water from inlet port 29 is caused to initially pass through the pre-filter stage 30 before passing to any of the other filtering stages. Other arrangements would however be possible. The pre-filter stage 30 in Figure 3 is followed by a first filtering stage 32 that comprises hollow fiber tubes. The first filtering stage 32 is then followed by a second filtering stage 34 comprising an activated carbon filter.

As shown in Figure 4, in some embodiments when the filtering unit 22 comprises a separate cartridge 42, it may be the case that the cartridge 42 only comprises some of the filtering stages. For example, in the Figure 4 example, the cartridge 42 includes only the first filtering stage 32 and second filtering stage 34, but the pre-filter is not replaced. Various other arrangements would however be possible and in general any one or more of the filtering stages may be replaceable, as desired.

It will also be appreciated that the ordering and arrangement of the filtering stages is not limited to what is shown in Figure 3 and in some embodiments the order of the first and second filtering stages, for example, could be reversed. Likewise, a pre-filter may in some embodiments be omitted and instead a corresponding coarse filter may be provided at the end of the faucet, e.g. covering the outlet 27, in order to provide the desired three-stage filtering.

Similarly, whilst an in-line arrangement of the filtering stages as shown in Figure 3 may provide certain benefits in terms of maintaining pressure, the filtering stages need not be provided in-line as shown in Figure 3 but may be provided in any suitable and desired geometrical arrangement. For example, the second filtering stage 34 could radially surround the first filtering stage 32. Also, the relative arrangement of the outlet 27 and actuator 28 can be varied as desired. Thus, whilst Figure 3 shows one particular implementation of a three-stage filtering unit 22 within a faucet 26, other arrangements would of course be possible.

### Coarse filtering stage 30

The coarse filtering stage is designed to filter relatively larger debris. For example, this may be desired to eliminate rust, silt, blood worms, and so on. The coarse filtering stage may thus be designed to filter out particles above a certain size.

In embodiments the coarse filtering stage comprises a gauze or mesh filter. In that case the size of the holes in the gauze or mesh are selected to filter particles of the desired size. For example, in an embodiment the coarse filtering stage may comprise a mesh or gauze having apertures that are sized and configured to filter out particles having a size (e.g. diameter) greater than about 2 mm. In general the coarse filtering stage may be configured to filter out particles having any suitable and desired size (e.g. diameter), e.g., such as greater than about 3 mm, greater than about 2 mm, greater than about 1 mm, as appropriate. These sizes may be suitable for filtering out relatively larger particles that may undesirably be present in the water and in embodiments prevent such particles impacting on the subsequent filtering stages.

The coarse filtering stage may suitably be formed from corrosion resistant steel but could also be plastic or any other suitable material.

As mentioned above, and as shown in Figure 3, the coarse filtering stage is in embodiments provided as a pre-filter. However, other arrangements are contemplated. Likewise, as shown in Figure 4, the coarse filtering stage 30 may remain on the faucet 26 even when the other stages are provided as a separate cartridge 42, but the coarse filtering stage 30 could also be provided as part of a separate cartridge, if that were desired.

The coarse filtering stage 30 may further comprise any other suitable and desired filter media, i.e. in addition to the gauze or mesh filter discussed above. Various arrangements would be possible in this regard.

### First Filtering Stage 32

The first filtering stage 32 is designed to filter out water borne pathogens and protozoa. In embodiments the first filtering stage comprises a hollow fiber filter. Thus, the first filtering stage may comprise a plurality of flexible hollow fibers. The fibers may have relatively narrow diameters (such as between 1-5 mm) to provide the desired filtering effect.

Such hollow fibers filters are known as such in other contexts and the first filtering stage 32 may in general comprise any suitable and desired arrangement of hollow tubes.

The hollow fiber filter may be a so-called hollow fiber ultrafilter having pores ≤0.1 microns in size (nominal). However, in general any suitably size hollow fiber filters may be used as desired. For example, in some embodiments the hollow fiber filter may have pores of nominal size 0.5 microns or less, 0.4 microns or less, 0.3 microns or less, 0.2 microns or less, 0.1 microns or less. These sizes may be suitable for passing water whilst filtering out undesired sediment, bacteria, protozoa, and so on.

Alternatively, or additionally, the first filtering stage 32 may comprise one or more ion-exchange resins, such as an anion-exchange resin and/or a cation-exchange resin. Such ion-exchange resin filters are also known as such in other contexts. These can also provide effective filtering of water borne pathogens, and can also reduce maintenance requirements compared to using a single central filter (although in general ion-exchange resin filters may require replacing more frequently than hollow fiber filters).

The first filtering stage 32 may further comprise any other suitable and desired filter media, i.e. in addition to the hollow fiber filters and/or ion-exchange resins discussed above. Various arrangements would be possible in this regard.

### Second Filtering Stage 34

The second filtering stage 34 is designed to remove residual chlorine, heavy metal ions, trihalomethanes, and other such chemical treatments that may be applied to the water. The second filtering stage 34 in embodiments comprises activated carbon. In embodiments the activated carbon is provided in the form of discrete pellets (or "pebbles"), rather than compacted carbon. The activated carbon pellets may in general take any suitable and desired form. The use of activated carbon pellets as opposed to compacted carbon helps reduce weight and pressure loss, whilst still providing effective filtering.

The second filtering stage 34 may further comprise any other suitable and desired filter media. For example, in addition to the activated carbon, the second filtering stage 34 could also comprise one or more ion-exchange resins, such as an anion-exchange resin and/or a cation-exchange resin. Various other arrangements would be possible in this regard.

Variations on the examples described above fall within the scope of the claims.

## Claims

1. An aircraft water supply system comprising:
a water tank for storing potable water; and
two or more faucets that are each connected to the water tank and configured to dispense the potable water on demand in response to a user actuating the faucet,
wherein each of the two or more faucets includes a respective filtering unit.

2. The aircraft water supply system of claim 1, wherein the respective filtering unit for each faucet provides three stages of filtering comprising: (i) a coarse filtering stage; (ii) a first filtering stage comprising a hollow fiber filter and/or one or more ion exchange resin filters; and (iii) a second filtering stage comprising activated carbon.

3. A faucet for an aircraft water supply system as claimed in claim 1, the faucet including a respective filtering unit comprising: (i) a coarse filtering stage; (ii) a first filtering stage comprising a hollow fiber filter and/or one or more ion exchange resin filters; and (iii) a second filtering stage comprising activated carbon.

4. The aircraft water supply system of claim 1 or 2, or the faucet of claim 3, wherein the filtering units are integrated or installed into their respective faucets such that the filtering unit is provided within the body of the faucet between an inlet portion of the faucet at which the faucet is connected to the aircraft water supply system and an outlet of the faucet through which water is dispensed.

5. An aircraft water supply system according to any of claims 1, 2 or 4, or a faucet according to claim 3 or 4 wherein the filtering unit comprises a cartridge that is removable from the faucet.

6. The aircraft water supply system or faucet of claim 5, when dependent on claim 2 or 3, wherein the cartridge includes one or more of (i) the coarse filtering stage; (ii) the first filtering stage; and (iii) the second filtering stage.

7. An aircraft water supply system or a faucet according to claim 2, 3 or any of claims 4 to 6 when dependent on claim 2 or 3, wherein the coarse filtering stage comprises a mesh or gauze.

8. An aircraft water supply system or a faucet according to claim 7 wherein the mesh or gauze comprises apertures that are sized and configured to filter out particles having a size of greater than 2 mm.

9. An aircraft water supply system or a faucet according to claim 2, 3 or any of claims 4 to 8 when dependent on claim 2 or 3 wherein the second filtering stage comprises activated carbon pebbles.

10. An aircraft water supply system or a faucet according to claim 2, 3 or any of claims 4 to 9 when dependent on claim 2 or 3, wherein the filtering stages are arranged such that water flows through the coarse filtering stage and then into and through the first filtering stage and the second filtering stage in sequence.

11. An aircraft water supply system or a faucet according to claim 2, 3 or any of claims 4 to 10 when dependent on claim 2 or 3, wherein the first and second filtering stages are arranged in a flow direction such that all water flowing through first filtering stage flows directly into second filtering stage along the flow direction.

12. An aircraft water supply system or a faucet according to claim 2, 3 or any of claims 4 to 11 when dependent on claim 2 or 3, wherein water flows radially through the second filtering stage to an outlet of the faucet.

13. An aircraft comprising an aircraft water supply system according to any of claims 1, 2 or 4 to 11.

14. An aircraft according to claim 13 wherein the water tank is installed within a cargo compartment of the aircraft.
